# EUROPEAN PATENT APPLICATION

(11) **EP 1 191 491 A2**
(43) Date of publication of application: **27.03.2002**
(21) Application number: 01121858.3
(22) Date of filing: 11.09.2001
(51) Int. Cl.: G07F 7/10, G06K 19/077

(54) **Electronic apparatus capable of being loaded with ic card having antenna built-in**

(30) Priority: 26.09.2000 JP 2000292867
(71) Applicant: Kabushiki Kaisha Toshiba, Tokyo (JP)
(72) Inventor: Matsumoto, Yasuo, Minato-ku, Tokyo 105-8001 (JP)
(74) Representative: Henkel, Feiler, Hänzel

(57) **Abstract**

An electronic apparatus (1) comprises an apparatus body (2) that includes a card storage portion (31).
An IC card (27) that is inserted into the card storage portion (31) includes an antenna portion (45) that has an antenna (44) in its top end. The apparatus body (2) has one end in which a card slot (32) continuous with the card storage portion (31) opens. The one end of the apparatus body (2) has an escape portion (51) that is formed by undercutting it in a manner such that the antenna portion (45) of the IC card (27) is exposed when the IC card (27) is inserted into the card storage portion (31).

## Description

The present invention relates to a portable electronic apparatus capable of being loaded with, for example, an SD (secure digital) card having a wireless communication function, and more particularly, to a structure for maintaining satisfactory transmission/ reception performance of an antenna when an SD card is inserted in a card storage portion as it is used.

A portable electronic apparatus, such as a portable computer or PDA (Personal Digital Assistant), generally uses an IC card based on PCMCIA as memory or I/O expansion means. Recently developed IC cards of this type are furnished with a wireless communication function such as Bluetooth (trademark). With use of these IC cards, a plurality of electronic apparatuses that are located at short distances can be wirelessly connected for data transmission and reception, so that a network can be constructed easily.

One such IC card with the wireless communication function is provided with an antenna portion that has an antenna built-in, and like a conventional one, is set in a card slot of an electronic apparatus as it is used. If the antenna portion is concealed under the housing of the apparatus, the transmission/reception performance of the antenna lowers. In order to obtain a desired transmission/reception performance, therefore, the IC card is set in the card slot in a manner such that the antenna portion projects outside the housing.

According to this IC card, the antenna portion projects outside the enclosure. When the electronic apparatus is carried about, for example, therefore, the IC card is inevitably subjected to external force that bends it or drives it into the card slot. Thus, the IC card is easily damaged.

If the length of projection of the IC card from the card slot is minimized to avoid this, the end portion of the card cannot be easily held between fingertips as the card is drawn out of the card slot. Thus, the efficiency of operation for drawing out the IC card from the card slot is not very high, and handling the card requires much time and labor.

The present invention has been contrived in consideration of these circumstances, and its object is to provide an electronic apparatus capable of preventing damage to an IC card and facilitating handling of the card without ruining the transmission/ reception performance of an antenna at all.

In order to achieve the above object, an electronic apparatus according to a first aspect of the present invention comprises an apparatus body including a card storage portion in which an IC card is removably inserted. The IC card includes an antenna portion that has an antenna in the top end thereof. The apparatus body has one end in which a card slot continuous with the card storage portion opens. The one end of the apparatus body has an escape portion formed by undercutting the one end in a manner such that the antenna portion of the IC card is exposed when the IC card is inserted into the card storage portion.

When the IC card is inserted into the card storage portion, according to this arrangement, the antenna portion of the IC card is exposed to the outside of the apparatus body through the escape portion. Accordingly, the apparatus body never covers the antenna portion, so that the antenna can maintain satisfactory transmission/reception performance.

Since the one end of the apparatus body is undercut to expose the antenna portion to the outside of the apparatus body, moreover, the antenna portion never projects long to the outside of the apparatus body. Therefore, the IC card cannot be easily subjected to external force and can be prevented from being damaged. Besides, the antenna portion that is exposed to the escape portion can be securely pinched between fingertips. Thus, the IC card can be easily taken out of the card storage portion.

In order to achieve the above object, an electronic apparatus according to a second aspect of the invention comprises an apparatus body and a cardholder supported on the apparatus body. The cardholder includes a card storage portion in which an IC card, including an antenna portion having an antenna in the top end thereof, is removably inserted and one end in which a card slot continuous with the card storage portion opens. The one end of the cardholder has an escape portion formed by notching the one end in a manner such that the antenna portion of the IC card is exposed when the IC card is inserted into the card storage portion.

When the IC card is inserted into the card storage portion of the cardholder, according to this arrangement, the antenna portion of the IC card is exposed to the outside of the apparatus body through the escape portion. Thus, the cardholder never covers the antenna portion, so that the antenna can maintain satisfactory transmission/reception performance.

Since the one end of the cardholder is notched to expose the antenna portion to the outside of the cardholder, moreover, the antenna portion never projects long to the outside of the cardholder. Thus, the IC card cannot be easily subjected to external force, and therefore, can be prevented from being damaged. Besides, the antenna portion that is exposed to the escape portion can be securely pinched between fingertips, so that the IC card can be easily taken out of the cardholder.

In order to achieve the above object, an electronic apparatus according to a third aspect of the invention comprises an apparatus body and a cardholder supported on the apparatus body. The cardholder includes a card storage portion in which an IC card, including an antenna portion having an antenna built-in, is removably inserted and one end in which a card slot continuous with the card storage portion opens. The cardholder has an opening through which the antenna portion of the IC card is exposed when the IC card is inserted into the card storage portion.

When the IC card is inserted into the card storage portion of the cardholder, according to this arrangement, the antenna portion of the IC card is exposed to the outside of the apparatus body through the opening. Thus, the cardholder never covers the antenna portion, so that the antenna can maintain satisfactory transmission/reception performance.

Since the antenna portion need not be made to project long to the outside of the cardholder, moreover, the IC card cannot be easily subjected to external force, and therefore, can be prevented from being damaged.

Since the position of the opening of the cardholder can be changed freely, furthermore, the antenna need not always be set in the top end of IC card. Thus, the antenna can enjoy a higher degree of freedom of positioning.

In order to achieve the above object, an electronic apparatus according to a fourth aspect of the invention comprises an apparatus body having a recess and a cardholder supported in the recess of the apparatus body. The cardholder is rockable between a first position in which it is stored in the recess and a second position in which it projects to the outside of the apparatus body. The cardholder includes a card storage portion in which an IC card, including an antenna portion having an antenna in the top end thereof, is removably inserted and one end in which a card slot continuous with the card storage portion opens. The one end of the cardholder has an escape portion formed by notching the one end in a manner such that the antenna portion of the IC card is exposed when the IC card is inserted into the card storage portion. Further, a lock portion is located in the recess of the apparatus body. The lock portion removably catches the IC card to lock the IC card in the card storage portion when the cardholder having the IC card therein is rocked to the first position.

When the IC card is inserted into the card storage portion of the cardholder, according to this arrangement, the antenna portion of the IC card is exposed to the outside of the apparatus body through the escape portion. Thus, the cardholder never covers the antenna portion, so that the antenna can maintain satisfactory transmission/reception performance.

Since the one end of the cardholder is notched to expose the antenna portion of the IC card to the outside of the cardholder, moreover, the antenna portion never projects long to the outside of the cardholder. Thus, the IC card cannot be easily subjected to external force, and therefore, can be prevented from being damaged. Besides, the antenna portion that is exposed to the escape portion can be securely pinched between fingertips, so that the IC card can be easily taken out of the cardholder.

If the cardholder having the IC card therein is rocked to the first position, according to this arrangement, moreover, the lock portion of the apparatus body catches the IC card. Therefore, the IC card cannot be taken out of the cardholder while the electronic apparatus is being worked, for example, so that wrong handling of the IC card and the resulting destruction of data can be prevented.

If the cardholder having the IC card therein is rocked from the first position to the second position, the lock portion is disengaged from the IC card. Thereupon, a state is established such that the IC card can be freely taken out of the cardholder. Since the cardholder projects to the outside of the apparatus body, moreover, the cardholder is surrounded by a wide-open area, so that the IC card can be taken out with ease.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a front view of an electronic apparatus according to a first embodiment of the present invention;
FIG. 2 is a rear view of the electronic apparatus of the first embodiment;
FIG. 3 is a sectional view of the electronic apparatus of the first embodiment showing a cardholder with an IC card therein in a first position;
FIG. 4 is a sectional view of the electronic apparatus of the first embodiment showing the cardholder with the IC card therein in a second position;
FIG. 5 is a sectional view taken along line F5-F5 of FIG. 3;
FIG. 6 is an enlarged sectional view of a portion F6 of FIG. 5;
FIG. 7 is a sectional view taken along line F7-F7 of FIG. 3;
FIG. 8 is a rear view of the electronic apparatus of the first embodiment showing a holder supporting portion of an apparatus body cleared of the cardholder;
FIG. 9A is a front view of the cardholder;
FIG. 9B is a rear view of the cardholder;
FIG. 10 is a block diagram schematically showing a configuration of an SD card;
FIG. 11 is a plan view of the SD card;
FIG. 12 is a front view of a cardholder according to a second embodiment of the invention with the IC card therein;
FIG. 13 is a front view of a cardholder according to a third embodiment of the invention with the IC card therein; and
FIG. 14 is a sectional view taken along line F14-F14 of FIG. 13.

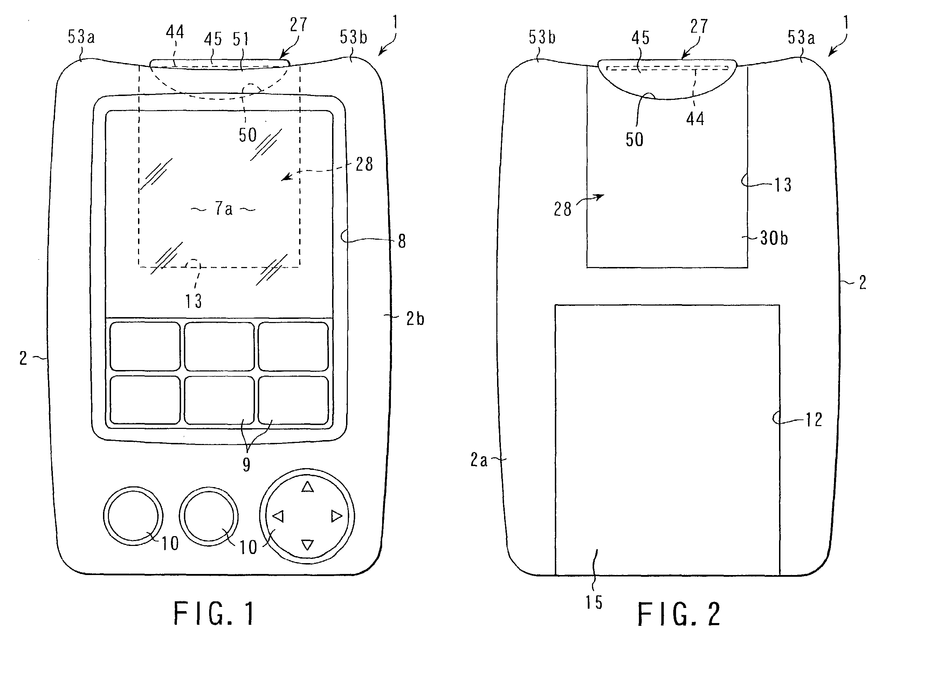

A first embodiment of the present invention will now be described with reference to the accompanying drawings of FIGS. 1 to 11.

FIGS. 1 and 2 show a portable electronic apparatus 1 such as a PDA (Personal Digital Assistant). The electronic apparatus 1 comprises an apparatus body 2 of synthetic resin. The apparatus body 2 is in the form of a flat box that has a bottom wall 2a, upper wall 2b, left- and right-hand sidewalls 2c and 2d, upper end wall 2e, and lower end wall 2f.

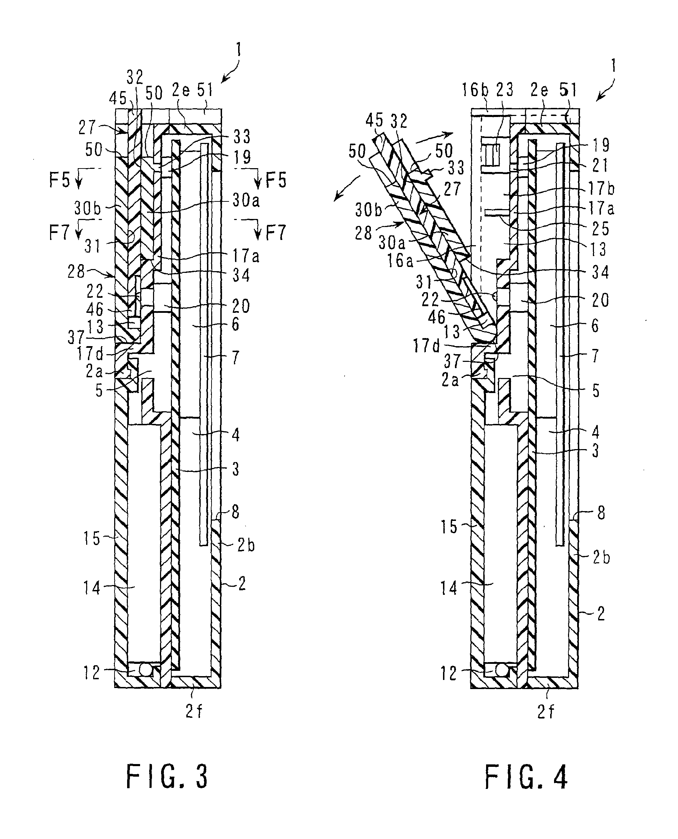

As shown in FIG. 3 and 4, the apparatus body 2 has a circuit substrate 3 built-in. The circuit substrate 3 is located parallel to the front wall 2b of the apparatus body 2. The circuit substrate 3 divides the interior of the apparatus body 2 between first and second sections 4 and 5. The first section 4 is situated between the front wall 2b of the apparatus body 2 and the circuit substrate 3. The second section 5 is situated between the bottom wall 2a of the apparatus body 2 and the circuit substrate 3.

A liquid crystal display device 6 and a tablet 7 are stored in the first section 4 of the apparatus body 2. The display device 6 and the tablet 7 are superposed on each other. The tablet 7 has a screen 7a, as shown in FIG. 1. The screen 7a is exposed to the outside of the apparatus body 2 through an opening 8 in the front wall 2b. A plurality of icons 9 arranged on the screen 7a. Further, a plurality of operating keys 10 are arranged on the front wall 2b of the apparatus body 2. The keys 10 are located adjacent to the screen 7a.

As shown in FIGS. 2 to 4, the apparatus body 2 is provided with a battery storage portion 12 and a holder supporting portion 13. The battery storage portion 12 serves to store a plurality of batteries 14 for use as a power source of the electronic apparatus 1. The battery storage portion 12 is formed of a recess that indents the second section 5 of the apparatus body 2, and is situated in the lower half of the body 2. The battery storage portion 12 opens in the bottom wall 2a and the lower end wall 2f of the apparatus body 2. The battery storage portion 12 and the batteries 14 are concealed under a removable battery cover 15.

The holder supporting portion 13 is situated behind the display device 6 and in the upper half of the apparatus body 2. The supporting portion 13 is formed of a recess that indents the second section 5 of the apparatus body 2, and has first and second openings 16a and 16b that open in the bottom wall 2a and the upper end wall 2e, respectively. Further, the supporting portion 13 includes a bottom wall 17a, left-and right-hand sidewalls 17b and 17c, and end wall 17d. The bottom wall 17a is located opposite the first opening 16a and is parallel to the circuit substrate 3. The sidewalls 17a and 17b and the end wall 17d rise from the edge portion of the bottom wall 17a toward the bottom wall 2a. The end wall 17d is located opposite the second opening 16b.

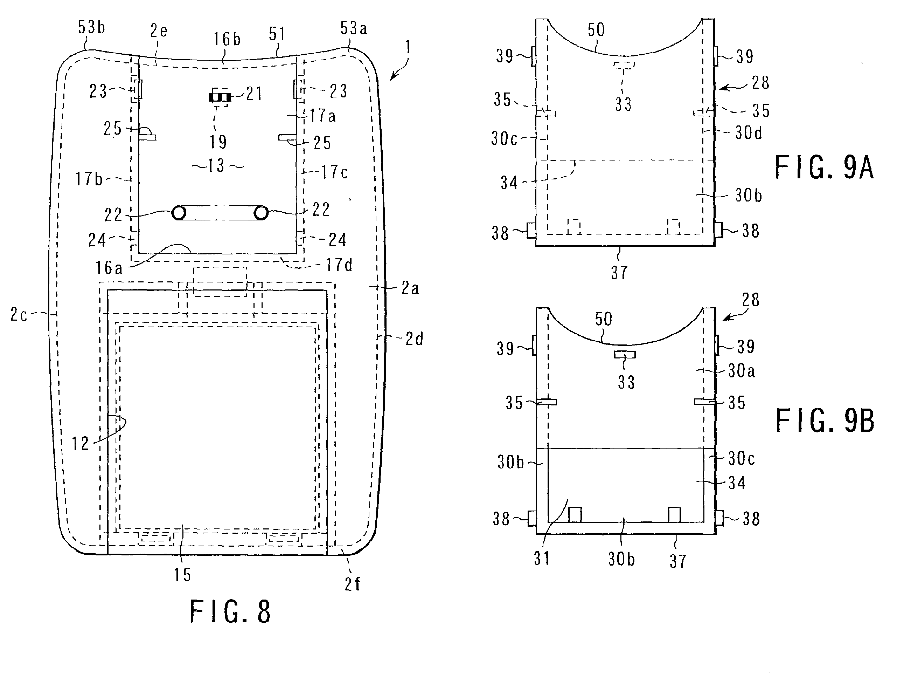

As shown in FIGS. 3 to 5, a detecting switch 19 and a connector 20 are mounted on the circuit substrate 3. The detecting switch 19 and the connector 20 are situated in the second section 5 and faces the bottom wall 17a of the holder supporting portion 13. The detecting switch 19 is situated nearer to the second opening 16b than to the end wall 17d of the supporting portion 13. A movable contact (not shown) of the switch 19 faces an aperture 21 in the bottom wall 17a. The connector 20 is situated nearer to the end wall 17d than to the detecting switch 19. The connector 20 has a plurality of terminals 22. As shown in FIG. 8, the terminals 22 are arranged in a line in the width direction of the apparatus body 2 and are exposed through the bottom wall 17a to the holder supporting portion 13.

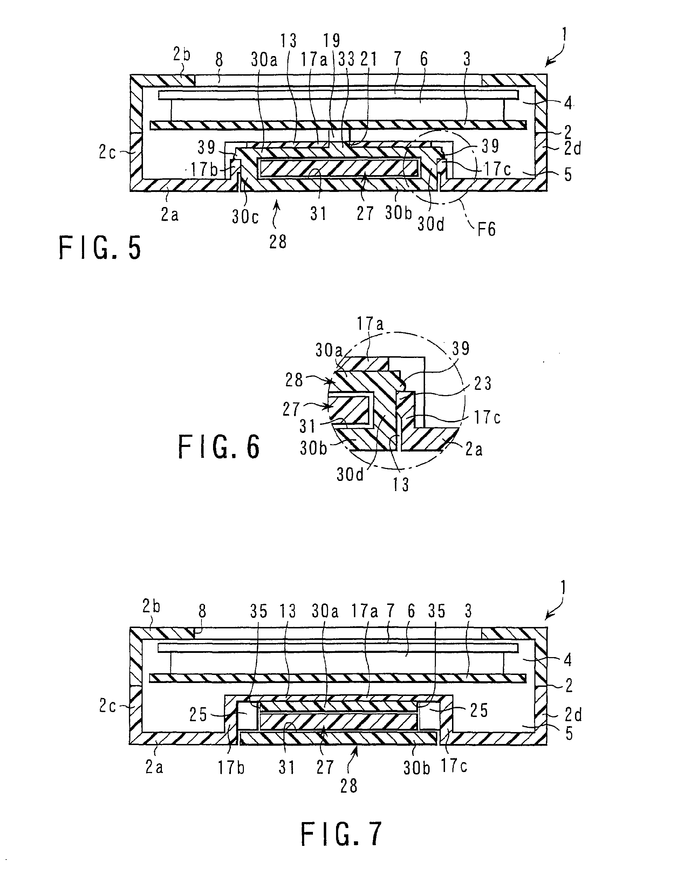

As shown in FIGS. 5 and 8, each of the sidewalls 17b and 17c of the holder supporting portion 13 have a catch 23 for use as holding portions and a bearing hole 24. The catches 23 adjoin the second opening 16b of the supporting portion 13. The catches 23 slightly project from their corresponding sidewalls 17b and 17c into the supporting portion 13, and can be elastically deformed away from the supporting portion 13. The bearing holes 24 have a circular opening shape and face each other in a position adjacent to the end wall 17d.

Further, the holder supporting portion 13 includes a pair of lock portions 25. The lock portions 25 are situated individually in two corner portions that are defined between the bottom wall 17a and the sidewalls 17b and 17c, and project at right angles to the supporting portion 13 from the walls 17a, 17b and 17c.

As shown in FIGS. 3 to 7, the holder supporting portion 13 of the apparatus body 2 supports a plastic cardholder 28. The holder 28 serves to hold an SD card 27 for use as an IC card. The holder 28 is in the form of a flat box that can be fitted tight in the supporting portion 13.

The cardholder 28 includes a first holding wall 30a that overlaps the bottom wall 17a of the holder supporting portion 13, a second holding wall 30b that faces the first holding wall 30a, and sidewalls 30c and 30d that extend between the first and second holding walls 30a and 30b. The walls 30a to 30d of the holder 28, in conjunction with one another, constitute a card storage portion 31 for storing the SD card 27 therein. The card storage portion 31 is continuous with a card slot 32. The slot 32 opens in one end of the cardholder 28.

As seen from FIGS. 9A and 9B, the first holding wall 30a of the cardholder 28 has a switch operator 33 and an opening 34. The operator 33, which serves to press the movable contact of the detecting switch 19, has a size such that it can get into the aperture 21. The opening 34 is situated opposite from the card slot 32. The opening 34 opens in the card storage portion 31 and faces the terminals 22 of the connector 20. Further, the cardholder 28 has through holes 35 in two corner portions that are defined by the first holding wall 30a and the sidewalls 30c and 30d. Each through hole 35 has a size such that it can receive each lock portion 25, and is continuous with the card storage portion 31.

The cardholder 28 has a guide surface 37 and a pair of pivot portions 38 at the other end thereof on the side opposite from the card slot 32. The guide surface 37 is curved in a circular arc. The guide surface 37 is slidably in contact with a corner portion that is defined by the bottom wall 17a and the end wall 17d. The pivot portions 38 project individually outward from the sidewalls 30c and 30d of the cardholder 28, and are fitted individually in the bearing holes 24 of the holder supporting portion 13. Thus, the holder 28 is supported on the apparatus body 2 so as to be rockable around the pivot portions 38 from a first position to a second position and from the second position to the first position.

FIGS. 3, 5 and 7 show the cardholder 28 in the first position. In this first position, the first holding wall 30a of the holder 28 overlaps the bottom wall 17a of the holder supporting portion 13, and the second holding wall 30b is situated flush with the bottom wall 2a of the apparatus body 2. Thus, the detecting switch 19 is turned on by means of the switch operator 33 as the operator 33 gets into the aperture 21. At the same time, the lock portions 25 of the supporting portion 13 advances into the card storage portion 31 through the through holes 35 of the cardholder 28, and the terminals 22 of the connector 20 get into the storage portion 31 through the opening 34. As shown in FIG. 6, moreover, protrusions 39 that are formed individually on the sidewalls 30c and 30d of the cardholder 28 are elastically caught by their corresponding catches 23. Thereupon, the holder 28 is held in the first position, and the card slot 32 is situated in the second opening 16b of the holder supporting portion 13. Thus, according to the present embodiment, the catches 23 and the protrusions 39 constitute holding means for holding the holder 28 in the first position.

FIG. 4 shows the cardholder 28 in the second position. In this second position, the holder 28 is inclined in a manner such that it projects from the first opening 16a of the apparatus body 2, and the card slot 32 juts out long from the body 2. Further, the first holding wall 30a of the holder 28 moves away from the bottom wall 17a of the holder supporting portion 13. Thereupon, the switch operator 33 leaves the aperture 21 so that the detecting switch 19 is turned off, and the lock portions 25 are disengaged from the card storage portion 31 of the cardholder 28.

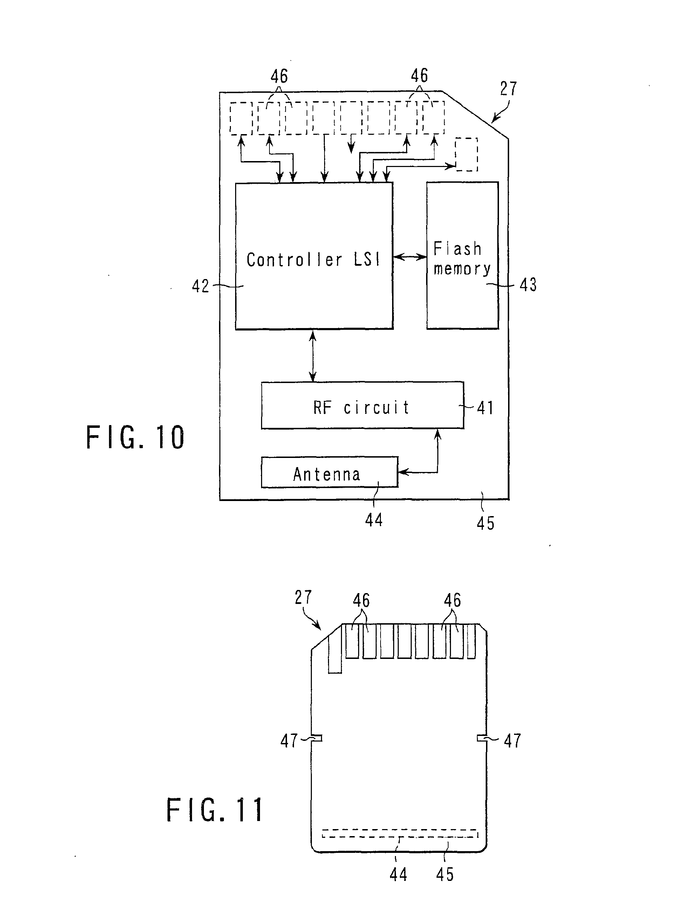

The SD card 27 is furnished with a wireless communication function such as Bluetooth (trademark). As shown in FIG. 10, the SD card 27 has therein an RF circuit 41, controller LSI 42, flash memory 43, and antenna 44 for wireless communication. The RF circuit 41 is a high-frequency circuit for wireless communication, and is electrically connected to the antenna 44 and the controller LSI 42. The controller LSI 42, which executes wireless interface control and interface control for the SD card 27, is electrically connected to the flash memory 43 and a plurality of connecting terminals 46.

The SD card 27 includes an antenna portion 45 that has the antenna 44 embedded in its top end. The antenna 44 extends horizontally in the width direction of the card 27. The connecting terminals 46 are situated at the other end of the card 27 on the side opposite from the antenna portion 45. The terminals 46 are arranged in a line in the width direction of the card 27 and exposed to the outside of the card 27.

The SD card 27 can be inserted into the card storage portion 31 through the card slot 32 with its other end, having the connecting terminals 46 thereon, ahead. When the card 27 is entirely stored in the storage portion 31, the terminals 46 of the card 27 are situated in the opening 34 of the cardholder 28, and the antenna portion 45 in the card slot 32.

As shown in FIG. 11, the SD card 27 has a pair of notch portions 47. The notch portions 47 are aligned individually with the through holes 35 of the cardholder 28 when the card 27 is stored in the card storage portion 31. If the holder 28 having the card 27 therein is rocked to the first position, therefore, the lock portions 25 of the holder supporting portion 13 are caught by the notch portions 47 through the through holes 35. Thus, the SD card 27 can be prevented from slipping out of the card storage portion 31.

As shown in FIGS. 9A and 9B, each of the first and second holding walls 30a and 30b of the cardholder 28 has one end edge portion that faces the card slot 32. The one end edge portion of each holding wall is formed having a first escape portion 50, which is downwardly cut in the shape of a circular arc. The depth of cut of the first escape portion 50 has its maximum in the central portion with respect to the width direction of the holder 28. When the SD card 27 is stored in the card storage portion 31, therefore, the antenna portion 45 of the card 27 is exposed to the outside of the holder 28 through the first escape portion 50.

When the cardholder 28 is in the first position, as shown in FIG. 3, the card slot 32 of the holder 28 is situated in the second opening 16b in the upper end wall 2e of the apparatus body 2. The upper end wall 2e has a second escape portion 51 that is formed by undercutting it in a downward circular arc. The depth of cut of the second escape portion 51 has its maximum in the central portion with respect to the width direction of the apparatus body 2. The second escape portion 51 overlaps the first escape portion 50 of the first holding wall 30a of the cardholder 28.

As seen from FIG. 1, therefore, the antenna portion 45 of the SD card 27 is exposed to the outside of the apparatus body 2 through the second escape portion 51, as viewed from the front wall 2b of the body 2.

The second escape portion 51 includes a first end portion 53a and a second end portion 53b. The first and second end portions 53a and 53b are spaced in the width direction of the apparatus body 2. When the cardholder 28 is held in the first position, therefore, the card slot 32 of the cardholder 28 is situated between the first and second end portions 53a and 53b. The first and second end portions 53a and 53b project outside the apparatus body 2, extending beyond the top end of the SD card 27 that is held in the holder 28.

The following is a description of steps of procedure for storing the SD card 27 in the card storage portion 31 of the cardholder 28 of the electronic apparatus 1 constructed in this manner.

First, the cardholder 28 is rocked to the second position and raised from the holder supporting portion 13 of the apparatus body 2, as shown in FIG. 4. In this state, the card 27 is inserted into the card slot 32. The card 27 is inserted into the card storage portion 31 through the slot 32 with the connecting terminals 46 ahead. When the card 27 is entirely stored in the storage portion 31, the terminals 46 of the card 27 are situated in the opening 34, and the notch portions 47 of the card 27 are aligned individually with the through holes 35 of the cardholder 28.

Then, the cardholder 28 is rocked from the second position to the first position. As this is done, the connecting terminals 46 that are first situated in the opening 34 run individually against the terminals 22 of the connector 20, whereupon the SD card 27 is electrically connected to the circuit substrate 3.

Thereafter, the lock portions 25 of the holder supporting portion 13 get into the notch portions 47 of the SD card 27 through the through holes 35 of the cardholder 28. Thereupon, the respective positions of the card 27 and the holder 28 are fixed, and the card 27 is locked so that it cannot be drawn out of the card storage portion 31.

Finally, the switch operator 33 of the cardholder 28 is inserted into the aperture 21 to press the movable contact of the detecting switch 19, thereby turning the switch 19 on. Thus, the storage of the holder 28 in the holder supporting portion 13 is detected electrically, whereupon the electronic apparatus 1 is switched on.

In taking out the SD card 27 from the card storage portion 31, the cardholder 28 is rocked from the first position to the second position. As this is done, the switch operator 33 of the holder 28 is drawn out of the aperture 21, whereupon the detecting switch 19 is turned off. Thus, the start of disengagement of the holder 28 from the supporting portion 13 is detected electrically, whereupon the electronic apparatus 1 is switched off.

Subsequently, the lock portions 25 leave their corresponding through holes 35 of the cardholder 28. As this is done, the lock portions 25 are disengaged individually from the notch portions 47 of the SD card 27, whereupon the card 27 is unlocked. Finally, the connecting terminals 46 of the card 27 leave their corresponding terminals 22 of the connector 20, whereupon the electrical connection between the card 27 and the circuit substrate 3 is canceled. The holder 28 is inclined so that its one end in which the card slot 32 opens outwardly projects long from the supporting portion 13. In this state, the card 27 can be drawn out of the card storage portion 31.

When the SD card 27 is in the cardholder 28, according to this arrangement, the antenna portion 45 of the card 27 is exposed to the outside of the holder 28 and the apparatus body 2 through the first and second escape portion 50 and 51, respectively.

Thus, the antenna portion 45 of the SD card 27 is exposed to the outside of the apparatus body 2, as viewed from both the bottom and front walls 2a and 2b of the body 2. Accordingly, the apparatus body 2 or the cardholder 28 never covers the antenna portion 45, so that the antenna 44 can maintain satisfactory transmission/reception performance.

Further, there is no possibility of the SD card 27 projecting long to the outside of the apparatus body 2 or the cardholder 28, since the holder 28 is cut in a circular arc or the upper end wall 2e of the body 2 is curved in a circular arc to expose the antenna portion 45 of the card 27. Thus, if the electronic apparatus 1 is stored in a bag as it is carried about, for example, the card 27 cannot be easily subjected to unreasonable external force to bend it or push it into the card slot 32. In consequence, the SD card 27 can be securely prevented from being damaged.

Since the antenna portion 45 of the SD card 27 is exposed through the first and second escape portions 50 and 51, moreover, it can be securely pinched between fingertips. Thus, the card 27 can be easily taken out of the card storage portion 31 and handled without requiring much labor.

According to the arrangement described above, furthermore, the first and second end portions 53a and 53b of the second escape portion 51 project outside the apparatus body 2, extending beyond the top end of the SD card 27 in the cardholder 28, when the holder 28 is held in the first position. If the upper end wall 2e of the body 2 is pressed against any obstacle, therefore, the first and second end portions 53a and 53b of the body 2 run against the obstacle before the top end of the card 27 does. Thus, the first and second end portions 53a and 53b can protect and prevent the SD card 27 from being damaged.

In the electronic apparatus 1 constructed in this manner, the connecting terminals 46 of the SD card 27 run against or move away from the terminals 22 of the connector 20, following the rocking motion of the cardholder 28. Accordingly, there is no possibility of the card 27 and the circuit substrate 3 being electrically connected to each other or the terminals 46 and 22 rubbing against one another as the electrical connection is canceled. Thus, the terminals 46 and 22 can be restrained from wearing, so that their durability can be improved.

If the cardholder 28 is rocked from the first position to the second position so that the SD card 27 can be taken out of it, moreover, the electronic apparatus 1 is switched off by means of the detecting switch 19 before the electrical connection between the card 27 and the circuit substrate 3 is canceled. Accordingly, the card 27 can be prevented from being taken out while data are being transferred between the card 27 and the apparatus 1. Thus, the data can be prevented from being destroyed, so that reliability of the apparatus 1 can be improved.

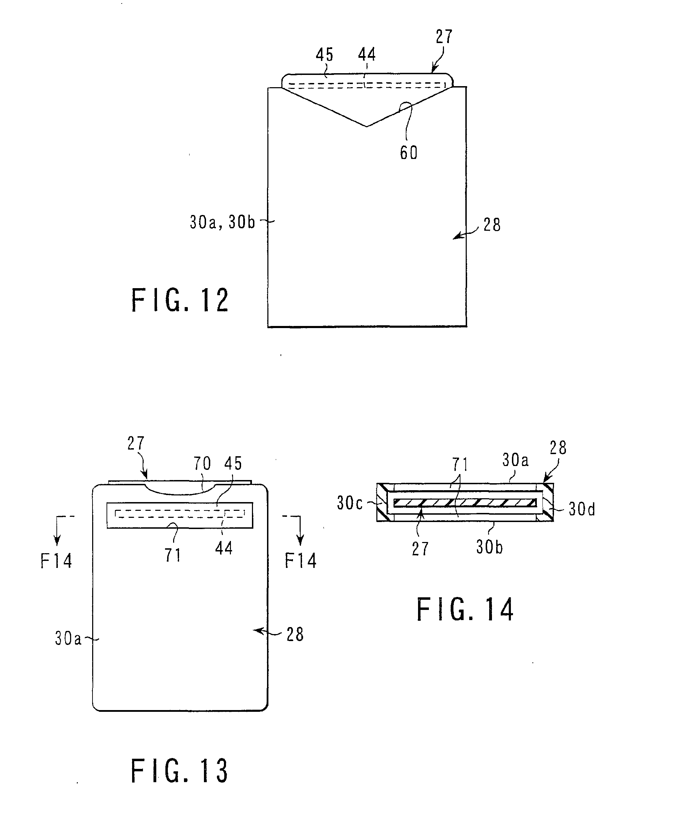

FIG. 12 shows a second embodiment of the invention.

The second embodiment differs from the first embodiment in the shape of a first escape portion 60 of a cardholder 28, and shares other configurations with the first embodiment.

As shown in FIG. 12, the first escape portion 60 is formed by downwardly cutting one end edge portion of each of holding walls 30a and 30b in the shape of a V. The depth of cut of the first escape portion 60 has its maximum in the central portion with respect to the width direction of the cardholder 28.

FIGS. 13 and 14 show a third embodiment of the invention.

In this third embodiment, each of holding walls 30a and 30b of a cardholder 28 is formed having a first escape portion 70 and an opening 71. The first escape portion 70 is formed by downwardly cutting one end edge portion of each of the holding walls 30a and 30b in the shape of a circular arc. The first escape portion 70 is smaller than the first escape portion 50 of the first embodiment, and is restricted to a size such that the top end of the SD card 27 can be only held between fingertips. The opening 71 opens in a position corresponding to the antenna portion 45 of the card 27 and adjoins the first escape portion 70.

If the SD card 27 is set in the card storage portion 31 of the cardholder 28, according to this arrangement, the antenna portion 45 of the card 27 faces the opening 71. At the same time, the top end of the card 27 is exposed to the outside of the holder 28 through the first escape portion 70.

Thus, the antenna portion 45 of the SD card 27 can be exposed to the outside of the cardholder 28 through the opening 71, so that the antenna 44 can maintain satisfactory transmission/reception performance. Since the opening 71 is independent of the first escape portion 70, moreover, it can be situated in any desired position in each of the first and second holding walls 30a and 30b of the holder 28. Therefore, the antenna 44 need not be set in the top end of the card 27, so that it can enjoy a higher degree of freedom of positioning.

The IC card that is furnished with the wireless communication function is not limited to the SD card, and may alternatively be a PC card that is based on PCMCIA, for example.

Further, the wireless communication system is not limited to the Bluetooth system, and may alternatively be the wireless LAN, for example.

## Claims

1. An electronic apparatus capable of being loaded with an IC card (27) including an antenna portion (45) having an antenna (44) in the top end thereof, **characterized by** comprising:
an apparatus body (2) including a card storage portion (31) in which the IC card (27) is removably inserted, the apparatus body (2) having one end in which a card slot (32) continuous with the card storage portion (31) opens, the one end of the apparatus body (2) having an escape portion (51) formed by undercutting the one end in a manner such that the antenna portion (45) of the IC card (27) is exposed when the IC card (27) is inserted into the card storage portion (31).

2. An electronic apparatus according to claim 1, **characterized in that** the one end of said apparatus body (2) includes a first end portion (53a) and a second end portion (53b) facing each other across the card slot (32), the first and second end portions (53a, 53b) projecting outside the apparatus body (2) so as to extend beyond the top end of the IC card (27) facing the card slot (32) when the IC card (27) is inserted into the card storage portion (31).

3. An electronic apparatus according to claim 2, **characterized in that** said escape portion (51) is curved in a circular arc between the first and second end portions (53a, 53b).

4. An electronic apparatus capable of being loaded with an IC card (27) including an antenna portion (45) having an antenna (44) in the top end thereof, **characterized by** comprising:
an apparatus body (2); and
a cardholder (28) supported on the apparatus body (2), the cardholder (28) including a card storage portion (31) in which the IC card (27) is removably inserted and one end in which a card slot (32) continuous with the card storage portion (31) opens, the one end of the cardholder (28) having an escape portion (50, 60, 70) formed by notching the one end in a manner such that the antenna portion (45) of the IC card (27) is exposed when the IC card (27) is inserted into the card storage portion (31).

5. An electronic apparatus according to claim 4, **characterized in that** said apparatus body (2) includes a recess (13) having a size corresponding to the cardholder (28), said cardholder (28) is supported on the apparatus body (2) so as to be rockable between a first position in which the cardholder (28) is stored in the recess (13) and a second position in which the cardholder (28) projects to the outside of the apparatus body (2), and said card slot (32) is separated from the apparatus body (2) when the cardholder (28) is in the second position.

6. An electronic apparatus according to claim 4, **characterized in that** said escape portion (50, 60, 70) is formed by notching the one end of the cardholder (28) in the shape of a circular arc.

7. An electronic apparatus according to claim 5, **characterized in that** said apparatus body (2) has one end adapted to correspond to the card slot (32) when the cardholder (28) is rocked to the first position, the one end of the apparatus body (2) having an escape portion (51) formed by undercutting the one end in a manner such that the antenna portion (45) of the IC card (27) is exposed when the IC card (27) is inserted into the card storage portion (31).

8. An electronic apparatus according to claim 7, **characterized in that** the one end of said apparatus body (2) includes a first end portion (53a) and a second end portion (53b) facing each other across the cardholder (28), the first and second end portions (53a, 53b) being adapted to project outside the apparatus body (2) so as to extend beyond the top end of the IC card (27) facing the card slot (32) when the IC card (27) is inserted into the card storage portion (31).

9. An electronic apparatus capable of being loaded with an IC card (27) including an antenna portion (45) having an antenna (44) built-in, **characterized by** comprising:
an apparatus body (2); and
a cardholder (28) supported on the apparatus body (2), the cardholder (28) including a card storage portion (31) in which the IC card (27) is removably inserted and one end in which a card slot (32) continuous with the card storage portion (31) opens, the cardholder (28) having an opening (71) through which the antenna portion (45) of the IC card (27) is exposed when the IC card (27) is inserted into the card storage portion (31).

10. An electronic apparatus according to claim 9, **characterized in that** said IC card (27) has a top end adapted to face the card slot (32) when the IC card (27) is inserted into the card storage portion (31), and the one end of said cardholder (28) has an escape portion (70) formed by notching the one end in a manner such that the top end of the IC card (27) is exposed when the IC card (27) is inserted into the card storage portion (31).

11. An electronic apparatus capable of being loaded with an IC card (27) including an antenna portion (45) having an antenna (44) in the top end thereof, **characterized by** comprising:
an apparatus body (2) having a recess (13);
a cardholder (28) supported in the recess (13) of the apparatus body (2) and rockable between a first position in which the cardholder (28) is stored in the recess (13) and a second position in which the cardholder (28) projects to the outside of the apparatus body (2), the cardholder (28) including a card storage portion (31) in which the IC card (27) is removably inserted and one end in which a card slot (32) continuous with the card storage portion (31) opens, the one end of the cardholder (28) having an escape portion (50) formed by notching the one end in a manner such that the antenna portion (45) of the IC card (27) is exposed when the IC card (27) is inserted into the card storage portion (31); and
a lock portion (25) located in the recess (13) of the apparatus body (2), the lock portion (25) being adapted removably to catch the IC card (27) to lock the IC card (27) in the card storage portion (31) when the cardholder (28) having the IC card (27) therein is rocked to the first position.

12. An electronic apparatus according to claim 11, **characterized by** further comprising holding means (23, 39) for holding the cardholder (28) in the first position when the cardholder (28) is rocked to the first position.

13. An electronic apparatus according to claim 12, **characterized in that** said apparatus body (2) has one end adapted to correspond to the card slot (32) when the cardholder (28) is rocked to the first position, the one end of the apparatus body (2) having an escape portion (51) formed by undercutting the one end in a manner such that the top end of the IC card (27) is exposed when the IC card (27) is inserted into the card storage portion (31).

14. An electronic apparatus according to claim 13, **characterized in that** the one end of said apparatus body (2) includes a first end portion (53a) and a second end portion (53b) facing each other across the cardholder (28), the first and second end portions (53a, 53b) being adapted to project outside the apparatus body (2) so as to extend beyond the top end of the IC card (27) facing the card slot (32) when the IC card (27) is inserted into the card storage portion (31).
